# EUROPÄISCHE PATENTSCHRIFT

(11) **EP 3 104 001 B1**
(45) Veröffentlichungstag und Bekanntmachung des Hinweises auf die Patenterteilung: **28.02.2018**
(21) Anmeldenummer: 15171654.5
(22) Anmeldetag: 11.06.2015
(51) Int. Cl.: F03D 7/04

(54) **ROTORBREMSE FÜR EINE WINDENERGIEANLAGE**
ROTOR BRAKE FOR A WIND TURBINE
FREIN DE ROTOR D'ÉOLIENNE

(43) Veröffentlichungstag der Anmeldung: 14.12.2016
(73) Patentinhaber: Nordex Energy GmbH, 22419 Hamburg (DE)
(72) Erfinder: Gäfke, Martin, 23795 Bad Segeberg (DE)
(74) Vertreter: Hauck Patentanwaltspartnerschaft mbB

(56) Entgegenhaltungen:
- EP-A2- 1 944 506
- DE-A1-102004 057 522
- US-A1- 2008 164 751
- US-B1- 6 254 197
- US-B1- 6 265 785

## Beschreibung

Die vorliegende Erfindung betrifft eine Rotorbremse für eine Windenergieanlage. Bei Windenergieanlagen werden Rotorbremsen häufig als aktive Bremsen ausgebildet, die mit steigendem Hydraulikdruck ein zunehmendes Bremsmoment ausüben. Bei der Verwendung einer Rotorbremse, also einer Bremse im Triebstrang der Windenergieanlage, ist vorgesehen, dass ein Bremszylinder mit einem ersten und einem zweiten Hydraulikdruck beaufschlagbar ist. Die unterschiedlichen Hydraulikdrücke entsprechen dabei den Funktionen des Abbremsens des Triebstranges sowie dem Halten des abgebremsten Triebstrangs. Für das Umschalten zwischen dem ersten und dem zweiten Hydraulikdruck ist eine Umschalteinrichtung vorgesehen. Aus US 2008/164751 A1 ist eine Windenergieanlage mit einer hydraulisch betätigten Rotorbremse bekannt.

Aus CN 2009 101 475 130 B ist eine Bremseinrichtung bekannt, bei der federvorgespannte Bremszylinder über ein Hydrauliksystem zeitlich verzögert gelüftet werden. Ein Vorratsspeicher 11 wird über ein steuerbares Proportionalventil in einen Tank entleert.

Aus EP 1 944 506 A2 ist eine Windenergieanlage mit einer hydraulisch betätigten Rotorbremse bekannt. Die Rotorbremse besitzt eine aktive Bremse, die einen Bremsdruck p_{B} und einen Haltedruck p_{H} kennt. Bei dem in dem Dokument beschriebenen Verfahren wird in einer ersten Phase ein Bremszylinder über ein erstes Druckminderventil mit einem ersten Druck p_{B} beaufschlagt. In der ersten Phase des Bremsvorgangs wird die Rotorbremse als Betriebsbremse unterstützend zu einem Pitchsystem eingesetzt. In einer zweiten Phase wird der Bremszylinder über ein zweites Druckminderventil mit einem zweiten Druck p_{H} beaufschlagt. In der zweiten Phase wird die Rotorbremse als Haltebremse für den stillstehenden Rotor der Windenergieanlage eingesetzt. Ein Umschalten zwischen dem Bremsdruck p_{B} und dem Haltedruck p_{H} erfolgt über eine hydraulische Betätigung an einem Umschaltventil. Zur Betätigung ist ein Speicher vorgesehen, der über eine Druckleitung auf Systemdruck gebracht werden kann. In der stromlosen Stellung des Umschaltventils ist der Speicher mit einem Tank verbunden, wobei ein Stromregelventil in der Druckleitung zum Tank angeordnet ist. Das Stromregelventil regelt den Abfluss der Hydraulikflüssigkeit aus dem Speicher in den Tank. Während des Abfließens der Hydraulikflüssigkeit aus dem Speicher fällt der Druck in der Druckleitung und damit an der hydraulischen Betätigung für das Umschaltventil. Ist ein vorbestimmter Druckwert unterschritten, wird das Umschaltventil geschaltet und der Haltedruck p_{H} liegt an einem Bremszylinder an.

Im Stand der Technik erfolgt ein hydraulisches Umschalten zwischen den unterschiedlichen Bremsdrücken, wobei jeweils ein separater Druckspeicher vorgesehen ist.

Der Erfindung liegt die Aufgabe zugrunde, eine Rotorbremse bereitzustellen, die mit möglichst einfachen Mitteln zuverlässig arbeitet und insbesondere keinen separaten Druckspeicher für ein hydraulisches Umschalten benötigt.

Erfindungsgemäß wird die Aufgabe durch eine Rotorbremse mit den Merkmalen aus Anspruch 1 gelöst. Vorteilhafte Ausgestaltungen bilden den Gegenstand der Unteransprüche.

Die erfindungsgemäße Rotorbremse ist vorgesehen und bestimmt für eine Windenergieanlage. Die Rotorbremse ist bevorzugt als aktive Bremse ausgebildet, die mit steigendem Hydraulikdruck ein zunehmendes Bremsmoment aufbringt. Die Rotorbremse besitzt ein erstes und ein zweites Druckminderventil, über die ein Bremszylinder mit einem ersten und einem zweiten Hydraulikdruck beaufschlagbar ist. Ferner ist eine Umschaltvorrichtung vorgesehen, die zwischen dem ersten und dem zweiten Hydraulikdruck umschaltet. Erfindungsgemäß weist die Umschalteinrichtung ein Druckbegrenzungsventil und einen Druckspeicher auf, die mit einer zeitlichen Verzögerung ein Umschaltventil zwischen dem ersten und dem zweiten Hydraulikdruck schalten. Der Druckspeicher ist über ein Druckbegrenzungsventil und über ein Stromregelventil mit einem Tank verbunden. Erfindungsgemäß wird über das Druckbegrenzungsventil der Fluss an Hydraulikflüssigkeit aus dem Druckspeicher in den Tank gesperrt, sobald der Druck unter einen vorbestimmten Mindestdruck gesunken ist. Hierdurch kann der hydraulische Schaltvorgang ausgelöst und zudem bei Erreichen des gewünschten Drucks ein weiterer Fluss von Hydraulikflüssigkeit gesperrt werden. Die Zwischenschaltung des Druckbegrenzungsventils erlaubt es, den Druckspeicher nicht ausschließlich für das hydraulische Umschalten vorzusehen, sondern den Druckspeicher auch für andere hydraulische Aufgaben in der Rotorbremse einzusetzen. Hierdurch wird der Aufbau der Rotorbremse vereinfacht.

In einer bevorzugten Ausgestaltung sperrt das Druckbegrenzungsventil, wenn der Druckwert unterhalb eines ersten Druckschaltwerts liegt. Das Druckbegrenzungsventil ist bei einem Druck oberhalb des ersten Druckschaltwerts auf durchgängig geschaltet, so dass Hydraulikflüssigkeit bei diesem Druckwert abfließen kann.

In einer zweckmäßigen Weiterbildung wird das Umschaltventil, beispielsweise als 2/2-Wegeventil ausgebildet, betätigt, wenn der Druckwert an seiner hydraulischen Betätigung unter einen zweiten Druckschaltwert fällt. Bevorzugt ist für ein Zusammenspiel des Druckbegrenzungsventils und der hydraulischen Umschaltung vorgesehen, dass der zweite Druckschaltwert kleiner oder gleich dem ersten Druckschaltwert ist, insbesondere kann der zweite Druckschaltwert auch 0 Bar betragen.

Bei einem sinkenden Druckwert sperrt das Druckbegrenzungsventil, wenn der Druckwert unterhalb des ersten Druckwerts liegt. Über das Stromregelventil kann in dem gesperrten Teil der Hydraulikleitung die Hydraulikflüssigkeit abfließen. Hierdurch kann auch Einfluss auf die Zeitspanne bis zum Schalten des Umschaltventils genommen werden.

In einer bevorzugten Ausgestaltung ist der Druckspeicher mit beiden Druckminderventilen verbunden. Bei einer hydraulischen Rotorbremse ist stets ein Druckspeicher, der beispielsweise als Pufferspeicher wirkt, vorzusehen, um Druckschwankungen an dem Bremszylinder auszugleichen. Bei der erfindungsgemäßen Ausgestaltung kann der Druckspeicher nach einem Sperren des Druckbegrenzungsventils diese Aufgabe übernehmen, indem der Druckspeicher mit beiden Druckminderventilen zur Erzeugung des Haltedrucks p_{H} und des Bremsdrucks p_{B} verbunden ist.

In einer bevorzugten Ausgestaltung ist ein erster Druckschalter für den Druckspeicher vorgesehen, der einen Mindestdruckwert an dem Druckspeicher überwacht. Der Druckschalter schaltet beispielsweise elektrisch, wenn ein bestimmter Mindestdruck an dem Druckspeicher unterschritten wird.

Bevorzugt kann auch ein zweiter Druckschalter vorgesehen sein, der an dem Umschaltventil die hydraulische Betätigung überwacht. Der Druckschalter spricht beispielsweise auf einen Druck an, bei dem das Umschaltventil hydraulisch schaltet, um so ein elektrisches Überwachungssignal zu erzeugen, das eine Betätigung der Umschalteinrichtung anzeigen soll.

Ein Beispiel für die Erfindung wird nachfolgend anhand der Figuren erläutert.
- Fig. 1: zeigt einen Hydraulikschaltplan für eine Rotorbremse gemäß der Erfindung und
- Fig. 2: zeigt eine Abwandlung des Schaltplans aus Fig. 1 mit zusätzlich einem Pufferspeicher und zwei Druckschaltern.

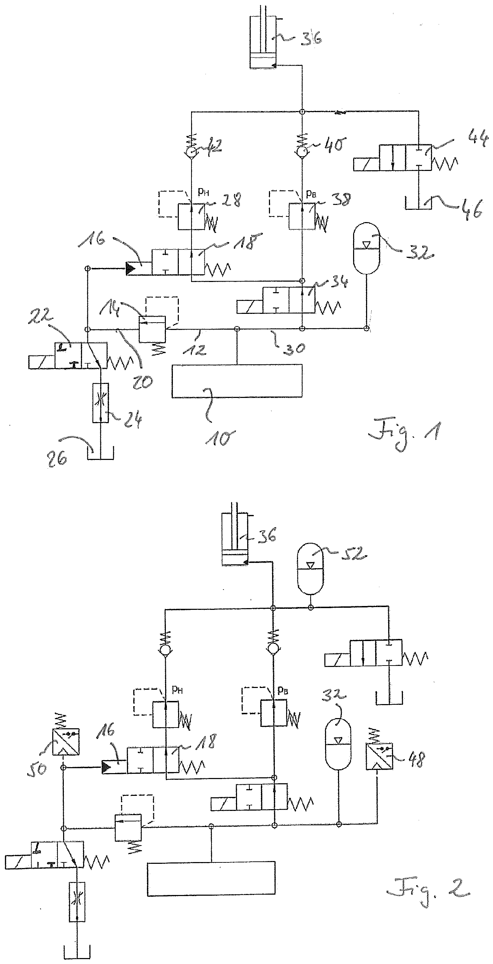

Fig. 1 zeigt beispielhaft einen Hydraulikschaltplan für eine Rotorbremse. Ein Drucksystem 10 ist mit einer Pumpe ausgestattet, um Hydraulikflüssigkeit mit ausreichendem Druck abzugeben. Für das Drucksystem 10 können zusätzlich weitere Leitungen und/oder Anschlüsse vorgesehen sein, um weitere hydraulische Verbraucher in der Windenergieanlage zu speisen.

Das Drucksystem 10 ist mit einer ersten Druckleitung 12 verbunden, die über ein Druckbegrenzungsventil 14 mit einer hydraulischen Betätigung 16 für ein Umschaltventil 18 verbunden ist. Eine Ausgangsleitung 20 des Druckbegrenzungsventils 14 ist zudem mit einem 2/2-Wegeventil 22 verbunden, das elektrisch schaltet und über ein Stromregelventil 24 mit einem Tank 26 verbindbar ist. In seiner bestromten Position sperrt das 2/2-Wegeventil 22 den Abfluss von Hydraulikflüssigkeit in den Tank 26, während in seiner nicht-bestromten Position die Verbindung zum Tank hergestellt ist.

Die Aufgabe des Druckbegrenzungsventils 14, der hydraulischen Betätigung 16, des 2/2-Wegeventils 22 und des Stromregelventils 24 liegt darin, eine Umschalteinrichtung zu bilden, die mit einer zeitlichen Verzögerung das Umschaltventil 18 betätigt. Das Umschaltventil 18 ist in seiner dargestellten Position leitend dargestellt, so dass ein Druckminderventil 28 für einen Haltedruck p_{H} mit Hydraulikflüssigkeit versorgt ist. In seinem hydraulisch betätigten Zustand liegt ein Druck an der hydraulischen Betätigung 16 an und das Umschaltventil 18 ist gesperrt.

Das Drucksystem 10 ist über eine zweite Druckleitung 30 mit einem Druckspeicher 32 verbunden. Der Druckspeicher 32 besitzt somit über die zweite Druckleitung 30 und die erste Druckleitung 12 eine Verbindung mit der Umschalteinrichtung und deren Druckbegrenzungsventil 14. Auf diese Weise steht der Druckspeicher 32 für die Umschalteinrichtung zur Verfügung.

Mit der zweiten Druckleitung 30 ist ein 2/2-Wegeventil 34 verbunden, das zur Betätigung eines Bremszylinders 36 geschaltet werden kann. Das 2/2-Wegeventil 34 ist seiner stromlosen Stellung leitend geschaltet und sperrt in seiner bestromten Position die Verbindung zu dem Bremszylinder 36. Stromabwärts ist das 2/2-Wegeventil 34 mit zwei Druckminderventilen 28 und 38 verbunden. Über die beiden Druckminderventile 28, 38 kann der Bremszylinder 36 mit unterschiedlichen Drücken versorgt werden. Das erste Druckminderventil 28 ist auf einen Haltedruck p_{H} für den Bremszylinder eingestellt. Das zweite Druckminderventil 38 ist auf einem Bremsdruck p_{B} eingestellt. Über das Umschaltventil 18 wird zwischen den beiden Drücken umgeschaltet. Der Haltedruck p_{H} ist größer als der Bremsdruck p_{B}, wobei ein Zurückströmen über das Rückschlagventil 40 verhindert wird. Ebenso verhindert ein zweites Rückschlagventil 42 ein Zurückfließen von Hydraulikfluid in das erste Druckminderventil 28.

Ein Entleeren des Bremszylinders 36 erfolgt über ein drittes 2/2-Wegeventil 44, das mit einem Tank 46 verbunden ist. Tank 26 und Tank 46 können identisch sein.

Der Vergleich mit dem Stand der Technik, insbesondere der EP 1 944 506, zeigt, dass der Druckspeicher 32 sowohl mit dem Druckbegrenzungsventil 14 verbunden ist als auch über das 2/2-Wegeventil 34 an der Erzeugung des Bremsdrucks teilnimmt. Bei dem Druckspeicher 32 handelt es sich um den einzigen Systemspeicher. Im Stand der Technik ist hingegen ein eigener Druckspeicher nur für die hydraulische Betätigung 16 des Umschaltventils 18 erforderlich.

Fig. 2 zeigt ein erweitertes hydraulisches System, das mit zusätzlichen Elementen ausgestattet ist. Zur besseren Übersicht sind die auch in Fig. 1 gezeigten Komponenten mit gleichen Bezugszeichen versehen. Auch die Funktionalität der Komponenten aus Fig. 1 entspricht der Funktionalität der gleichen Komponenten in Fig. 2. Zusätzlich hinzugekommen ist ein Druckschalter 48, der mit dem Druckspeicher 32 verbunden ist. Fällt der Druck in dem Druckspeicher 32 zu stark ab, so schaltet der Druckschalter 48 und erzeugt ein elektrisches Steuersignal für eine Steuerung der Rotorbremse. An das Steuersignal des Druckschalters 48 können dann Schaltvorgänge geknüpft sein, die den einwandfreien Betrieb der Rotorbremse sicherstellen. Ein zweiter Druckschalter 50 ist für die hydraulische Betätigung 16 vorgesehen. Der zweite Druckschalter 50 überwacht den an der hydraulischen Betätigung 16 anliegenden Druck und kann so ein elektrisches Signal erzeugen, beispielsweise wenn der Druck so weit abfällt, dass das Umschaltventil 18 schaltet.

Zusätzlich ist nahe dem Bremszylinder 36 ein Pufferspeicher 52 vorgesehen, der Druckschwankungen an dem Bremszylinder 36 ausgleicht.

Die erfindungsgemäße Rotorbremse verringert die Komplexität des hydraulischen Rotorbremssystems, da ein einziger Systemspeicher für das hydraulisch verzögerte Umschalten zwischen dem Bremsdruck p_{B} und dem Haltedruck p_{H} genügt. Die Funktion der hydraulischen Umschaltung zwischen den beiden Drücken hat sich hierbei bewährt.

Bei herkömmlichen Rotorbremsen, wie beispielsweise aus EP 1 944 506 bekannt, sind drei Druckspeicher in der Rotorbremse vorgesehen. Ein erster Druckspeicher ist der Systemspeicher, der die notwendige Druckenergie bereitstellt, selbst wenn im Notfall keine äußere Energie zum Betreiben einer Pumpe zur Verfügung steht. Der zweite Druckspeicher dient als Pufferspeicher zum Druckausgleich von Unebenheiten der Rotorbremse. Der dritte Druckspeicher ist für die hydraulische Zeitverzögerung beim Umschalten vorgesehen, indem innerhalb von beispielsweise 25 Sekunden bis 50 Sekunden der Speicher entleert und damit das hydraulisch betätigbare Umschaltventil schaltet. Bei der erfindungsgemäßen Rotorbremse ist die hydraulische Zeitverzögerung vereinfacht, da das notwendige Entnahmevolumen der hydraulischen Zeitverzögerung nicht aus einem dritten Druckspeicher entnommen wird, sondern aus dem Systemspeicher 32. Damit ist das System um einen Speicher reduziert.

Bei der erfindungsgemäßen Lösung wird das 2/2-Wegeventil 22 geschaltet und der Druckspeicher 32 entleert sich über das Stromregelventil 24 und das Druckbegrenzungsventil 14 in den Tank 26. Erreicht das Druckbegrenzungsventil 14 seinen vorbestimmten Druckwert, so schaltet dieses und der an der hydraulischen Betätigung 16 anliegende Druck fällt auf 0 Bar. Dadurch schaltet das Umschaltventil 18 und der Druck am Bremszylinder steigt von dem Bremsdruck p_{B} auf den Haltedruck p_{H}. Durch das Druckbegrenzungsventil 14 ist sichergestellt, dass noch genügend Druck im Druckspeicher 32 vorhanden ist und damit noch ausreichend Volumen zum Schließen der Bremse auf Haltedruck p_{H}.

Ein besonderer Vorteil der Erfindung liegt im Bereich der tiefen Temperaturen. Bei Druckspeichern ist das Gasvolumen temperaturabhängig. Dies heißt, dass der Vorfülldruck und das Vorfüllvolumen eines Druckspeichers sich mit der Temperatur ändern. Da bei der herkömmlichen Lösung der ausschließlich für die hydraulische Betätigung vorgesehene Druckspeicher vollständig entleert wird und das vollständige Entleeren bei tiefen Temperaturen lange dauert, wird der Druckspeicher häufig mit Heizmatten beheizt. Durch die Heizmatten wird der Druckspeicher auf eine gegenüber der Umgebungstemperatur erhöhte Temperatur geheizt, um eine zu große Verzögerung beim Umschalten zu vermeiden.

Bei der erfindungsgemäßen Ausgestaltung kann auf den Einsatz einer Heizmatte verzichtet werden, da der Druckspeicher 32 nicht auf seinen Vorfülldruck entleert wird, sondern auf einen fest eingestellten und temperaturunabhängigen Wert am Druckbegrenzungsventil 14. Damit haben der Vorfülldruck und die unterschiedlichen Temperaturen keinen Einfluss mehr.

### Bezugszeichenliste

- 12: 10 Drucksystem Druckleitung
- 14: Druckbegrenzungsventil
- 16: hydraulische Betätigung
- 18: Umschaltventil
- 20: Ausgangsleitung
- 22: 2/2-Wegeventil
- 24: Stromregelventil
- 26: Tank
- 28: Druckminderventil
- 30: Druckleitung
- 32: Druckspeicher
- 34: 2/2-Wegeventil
- 36: Bremszylinder
- 38: Druckminderventil
- 40: Rückschlagventil
- 42: Rückschlagventil
- 44: 2/2-Wegeventil
- 46: Tank
- 48: Druckschalter
- 50: Druckschalter
- 52: Pufferspeicher

## Patentansprüche

1. Rotorbremse für eine Windenergieanlage, die ein erstes und ein zweites Druckminderventil (28, 38) aufweist, über die ein Bremszylinder (36) mit einem ersten und einem zweiten Hydraulikdruck (p_{B}, p_{H}) beaufschlagbar ist, und eine Umschalteinrichtung aufweist, die zwischen dem ersten und dem zweiten Hydraulikdruck (p_{B}, p_{H}) schaltet, wobei die Umschalteinrichtung ein Druckbegrenzungsventil (14) und einen Druckspeicher (32) aufweist, die mit einer zeitlichen Verzögerung ein Umschaltventil (18) zwischen dem ersten und dem zweiten Druck (p_{B}, p_{H}) schalten,
**dadurch gekennzeichnet, dass**
der Druckspeicher (32) über das Druckbegrenzungsventil (14) und über ein Stromregelventil (24) mit einem Tank (26) verbindbar ist.

2. Rotorbremse nach Anspruch 1, **dadurch gekennzeichnet, dass** das Druckbegrenzungsventil (14) sperrt, wenn der Druckwert unterhalb eines ersten Druckschaltwerts liegt.

3. Rotorbremse nach Anspruch 2, **dadurch gekennzeichnet, dass** das Umschaltventil (18) hydraulisch betätigbar ist, wenn an seiner hydraulischen Betätigung (16) ein Druckwert unter einen zweiten Druckschaltwert fällt.

4. Rotorbremse nach Anspruch 3, **dadurch gekennzeichnet, dass** der zweite Druckschaltwert kleiner oder gleich dem ersten Druckschaltwert ist.

5. Rotorbremse nach einem der Ansprüche 1 bis 4, **dadurch gekennzeichnet, dass** der Druckspeicher (32) mit beiden Druckminderventilen (28, 38) verbunden ist.

6. Rotorbremse nach einem der Ansprüche 1 bis 5, **dadurch gekennzeichnet, dass** ein erster Druckschalter (48) für den Druckspeicher (32) vorgesehen ist, der einen Mindestdruckwert an dem Druckspeicher (32) überwacht.

7. Rotorbremse nach einem der Ansprüche 1 bis 6, **dadurch gekennzeichnet, dass** ein zweiter Druckschalter (50) für die hydraulische Betätigung (16) an dem Umschaltventil (18) vorgesehen ist.

8. Rotorbremse nach einem der Ansprüche 1 bis 7, **dadurch gekennzeichnet, dass** die Rotorbremse als eine mit steigendem Hydraulikdruck ein zunehmendes Bremsmoment aufbringende aktive Bremse ausgebildet ist.

## Claims

1. A rotor brake for a wind turbine, which has a first and a second pressure reduction valve (28, 38) via which a brake cylinder (36) can be pressurised by a first and a second hydraulic pressure (p_{B}, p_{H}) and which has a changeover device that switches between the first and the second hydraulic pressure (p_{B}, p_{H}), wherein the changeover device has a pressure relief valve (14) and a pressure accumulator (32) which switch a changeover valve (18) between the first and the second pressure (p_{B}, p_{H}) with a time lag,
**characterised in that**
the pressure accumulator (32) can be connected to a tank (26) via the pressure relief valve (14) and via a flow control valve (24).

2. The rotor brake according to claim 1, **characterised in that** the pressure relief valve (14) closes when the pressure is below a first pressure control value.

3. The rotor brake according to claim 2, **characterised in that** the changeover valve (18) can be actuated hydraulically when a pressure value on its hydraulic actuator (16) falls below a second pressure control value.

4. The rotor brake according to claim 3, **characterised in that** the second pressure control value is smaller than or equal to the first pressure control value.

5. A rotor brake according to any one of the claims 1 to 4, **characterised in that** the pressure accumulator (32) is connected to both pressure reduction valves (28, 38).

6. A rotor brake according to any one of the claims 1 to 5, **characterised in that** a first pressure switch (48) is provided for the pressure accumulator (32), which monitors a minimum pressure value on the pressure accumulator (32).

7. A rotor brake according to any one of the claims 1 to 6, **characterised in that** a second pressure switch (50) is provided for the hydraulic actuator (16) on the changeover valve (18).

8. A rotor brake according to any one of the claims 1 to 7, **characterised in that** the rotor brake is realised as an active brake which provides an increasing brake torque with increasing hydraulic pressure.

## Revendications

1. Frein de rotor d'éolienne, qui a une première et une deuxième valve réductrice de pression (28, 38) par lesquelles un cylindre de frein (36) peut être pressurisé avec une première et une deuxième pression hydraulique (p_{B}, p_{H}) et qui a un dispositif de commutation qui commute entre la première et la deuxième pression hydraulique (p_{B}, p_{H}), le dispositif de commutation ayant une soupape de limitation de pression (14) et un accumulateur de pression (32) qui commutent une soupape de commutation (18) entre la première et la deuxième pression (p_{B}, p_{H}) avec un décalage temporel, **caractérisé en ce que**
l'accumulateur de pression (32) peut être relié à un réservoir (26) via la soupape de limitation de pression (14) et via une soupape de réglage de débit (24).

2. Frein de rotor d'éolienne selon la revendication 1, **caractérisé en ce que** la soupape de limitation de pression (14) ferme quand la valeur de pression est au-dessous d'une première valeur de commutation de pression.

3. Frein de rotor d'éolienne selon la revendication 2, **caractérisé en ce que** la soupape de commutation (18) peut être actionnée de manière hydraulique quand une valeur de pression dans son élément de commande hydraulique (16) tombe au-dessous d'une deuxième valeur de commutation de pression.

4. Frein de rotor d'éolienne selon la revendication 3, **caractérisé en ce que** la deuxième valeur de commutation de pression est plus petite que ou pareille à la première valeur de commutation de pression.

5. Frein de rotor d'éolienne selon l'une quelconque des revendications 1 à 4, **caractérisé en ce que** l'accumulateur de pression (32) est relié à toutes les deux valves réductrices de pression (28, 38).

6. Frein de rotor d'éolienne selon l'une quelconque des revendications 1 à 5, **caractérisé en ce qu'**un premier pressostat (48) est prévu pour l'accumulateur de pression (32), qui surveille une valeur minimale de pression dans l'accumulateur de pression (32).

7. Frein de rotor d'éolienne selon l'une quelconque des revendications 1 à 6, **caractérisé en ce qu'**un deuxième pressostat (50) est prévu pour l'élément de commande hydraulique (16) sur la soupape de commutation (18).

8. Frein de rotor d'éolienne selon l'une quelconque des revendications 1 à 7, **caractérisé en ce que** le frein de rotor est réalisé comme un frein actif qui applique un couple de freinage croissant avec pression hydraulique croissante.
